# EUROPEAN PATENT APPLICATION

(11) **EP 4 813 518 A1**
(43) Date of publication of application: **30.09.2026**
(21) Application number: 26168364.3
(22) Date of filing: 27.03.2026
(51) Int. Cl.: B01L 3/00, B01F 33/30, F16K 99/00

(54) **GRAVITATIONALLY CHECKED MICROFLUIDIC VALVE**

(30) Priority: 27.03.2025 US 202563778986 P
(71) Applicant: National Research Council of Canada, Ottawa, Ontario K1A 0R6 (CA)
(72) Inventor: SHIU, Pun Pang, Ottawa, K1J 7T6 (CA); LI, Kebin, Brossard, J4Z 1R1 (CA); MORTON, Keith, St- Bruno-de-Montarville, J3V 3J9 (CA); VERES, Teodor, Montreal, H3V 1H2 (CA)
(74) Representative: Glück Kritzenberger Patentanwälte PartGmbB

(57) **Abstract**

A gravitationally checked microvalve for use in a microfluidic chip/device has a receptacle with a floor and at least one sidewall; a supply channel for non-capillary transport of liquid with an outlet into the receptacle; and an enclosure that permits pressurization-driven flow of tiny volumes of liquid with great control. The microvalve has an accretion surface surrounding the outlet on at least 3 sides thereof, that guides growth and formation of a bolus of the liquid from the supply channel to accrete volume at the outlet, by preventing spread of the liquid beyond the accretion surface, to draw a center of gravity of the bolus away from the sidewall. Once sufficient volume accretes, weight overbears adhesion, and the bolus falls. Preferably a slide is provided to guide the bolus's fall. As the fluid has fallen, gravity checks the valve after the fall. A vertical separation between the outlet and the floor is at least 5.5 mm to ensure checking.

## Description

### Field

This application relates to microfluidic devices in general, and to a microvalve that has check directionality enforced by gravity.

### Background

Instrument-less and lite-instrument bioanalytical technologies (e.g., antigen rapid tests, food, air and water testing) permit individuals to perform out-of-laboratory testing (including at home) for the presence of analytes (such as biological molecules, toxins, and pathogenic organisms), thereby reducing the burden on centralized labs, which is especially important at the peak of an infection cycle. Lab-on-chip platforms (LoCs) are examples of such technologies. LoCs utilize fluidic manipulation of microvolumes to perform assay protocols. Microvalves are an important component of LOCs, which enable delivery of microvolumes fluids in a sequential and punctuated manner leading to automation of assay protocols.

While a few microvalves may resemble microscale versions of macroscale valves, microvalving is generally a distinct field of endeavour, at least in part because surface tension dominates flow behaviour at the microscale, and gravitational force is weak in comparison. Most active microvalves are chip-integrated features in stacked multilayer structures that can be difficult to fabricate and assemble into devices on a large scale, and typically involve competing forces that require more force and energy to deploy and control. This is particularly noticeable in relation to the structures and resiliences required for checking (i.e. backflow prevention). While simpler microvalve structures exist, such as siphon valves, they require machinery to operate, such as centrifuges.

While chips formed of some plastic materials can be surface activated or coated to make them hydrophilic, or hydrophobic, to assist in valve functioning, such as according to the teachings of US 2006/0000709 to Bohm et al. Surface activation or coating to control a contact angle of liquid can be a mere inconvenience, if the chips are in a lab equipped with the required UV, plasma, or ozone (or other) activation equipment. To the extent that selective activation is required, in that some of the chip is to be not surface activated, and other parts are not, masking, activation, and mask removal (often preferably complete removal) increases considerably the care and time required to provide the part, but is sometimes still not prohibitive. However, for a great number of application spaces, such as out of a lab, it is entirely infeasible to confirm adequate surface activation required for performing routine testing. This leaves only chips that can provide desired wetting properties prior to delivery, but durability of activation depends on storage conditions, and uncertainties about chip use arise. Applicant seeks to provide a valve that relies on native/untreated surfaces of the valve, as these are most reliable.

Bohm et al. is not relevant prior art, in that it teaches: a 2-phase microfluidic system and not a mixed 2-phase and 3-phase system; a capillary-based valve; the valve is not checked; and the valve is not susceptible to gravitational effect and is expected to operate substantially the same regardless of orientation.

Simple designs and manufacturable structures of microvalves are important to LOCs, but such designs and structures are not trivial to design, especially for robust valving. There remains a need for microfluidic check valves that are simple in design, can be manufactured on a large scale, and has high repeatability and control.

### Summary

Applicant has devised a surprisingly simple and robust structure for valving, that, when compared with most pneumatically driven valves, requires only a slightly higher volume of chip material, and can advantageously be operated by low amplitude pressure, such as a pressure difference of less than 15 kPa (~2 Psi) (about 15% of ambient pressure on earth at sea level), and is preferably negative pressure (i.e. relative to ambience), without surface activation or hydrophilic or hydrophobic coatings in select areas. The valving can alternatively be provided by finger-magnitude pressure. Critically, the technique provides for check valving of small volumes of liquid, such as aqueous liquids, hydrocarbons, and oils, with better control than would be expected of such a low-cost chip and low energy process. The check valve is provided at an interface between a 2-phase and a 3-phase parts of a microfluidic network in a mesoscale device (i.e., chips having depth less than 2 cm, but more than 5.5 mm that are ideal for 3-phase microfluidics and too deep for typical, efficient, 2-phase microfluidics). Tailoring the valve around the valve opening allows for much smaller volume flows to reliably be check valved. The costs of higher-depth chambers for the 3-phase network segments, in terms of additional chip material, and forming times are quite small considering the efficiency and the reliability of the valving, and the low energy of the valving. Furthermore: very few materials come into contact with the liquid during valving, which reduces constraints on materials; and a very "forgiving" microfluidic design is used, avoiding many issues with capillary flow and contact-angle limited (material) processes, avoiding reliability issues that plague other microvalves. Applicant has found that the invented check microvalve is also tolerant of air bubbles entrained in the liquid, and permits microfluidic chip designs that avoid lost volumes used to avoid entrained bubbles.

Accordingly, a gravitationally checked microvalve (GCM) is provided for in a microfluidic device when resting on a horizontal surface. The GCM has: a receptacle with a floor and at least one sidewall; a supply channel having a hydraulic diameter (d_{HC}) of 0.1-1 mm for non-capillary transport of an aqueous liquid (to limit the form of the supply channel, but not to speak to its intended use which could be to check valve other liquids having similar rheology), the supply channel having an outlet to the receptacle, the outlet being at a first of the at least one sidewall (first sidewall); an enclosure upstream or downstream of the supply channel, adapted to enable a pressure difference on opposite sides of the enclosure to drive liquid through the supply channel to the outlet; and an accretion surface at, or proximate, the outlet, the accretion surface adapted to guide growth and formation of a bolus of the liquid from the supply channel and limit spread of the bolus beyond the accretion surface, to draw a center of gravity of the bolus away from the first sidewall (and by this reducing a contact surface and adhesive force on the bolus); where a vertical separation between the outlet and the floor below the slide is at least 5.5 mm. In operation, as the bolus grows while a surface contact area is constrained by the accretion surface, the bolus's weight eventually exceeds the adhesive force, and the bolus falls. In some embodiments, the volume of liquid accreted before fall is 10-500 µL.

One critical limit for the GCM therefore is a minimum amount of the liquid that must be delivered into the receptacle for valving to occur, without risk of backflow of the liquid through the supply channel after the delivery (i.e. checked). The minimum amount of liquid is associated with a critical bolus size, which must be suspended above the floor, for GCM valving. Thus, a vertical separation between the outlet and the floor of the receptacle below the slide is about 5.5 mm or more (for aqueous liquid). In some embodiments, the vertical separation is at least about 6 mm. In some embodiments, the vertical separation is in a range of: 7-25 mm; 7.5-12 mm, or 8-10 mm. The 0.1-1 mm hydraulic diameter makes for 2-phase fluidics in the supply channel, and the at least 5.5 mm vertical separation enables 3-phase fluidics within the receptacle.

The enclosure may be provided only upstream of the GCM, for example if positive pressure is used to press the liquid into the microvalve. This may be accomplished using a blister as taught in Applicant's US 10,046,893, or a finger pump as taught in FIG. 1 of Applicant's WO20211156844, the contents of both of which are incorporated by reference herein. However, many chip designs and uses are improved using negative pressure for pulling the liquid, as it improves control. Thus, it is generally preferred that the enclosure includes at least part of the supply channel, and extends over the receptacle, in at least one mode and state of the chip, and that a vent is provided upstream the supply channel.

The GCM described herein, locally resembles a waterfall and may be formed as a covered, one-layer manufacturable substrate. While the structure may look like a waterfall, with special attention paid to a front surface thereof, it in no way resembles a waterfall in operation. In some embodiments, both top and bottom covers are included with the substrate to completely form the GCM. Typically, the chip also comprises one or more liquid reservoirs and at least one microchannel for pneumatic and liquid transfers and extractions. The microvalve only requires pressures below ambient pressure or low negative pressures to perform liquid manipulations, including valving. Thus, the seals required are design and manufacturing are simplified.

The chip, consisting of a relief patterned substrate and one or more covers. In other embodiments, further layers and inserts may be added for different functions. The relief patterning defines at least parts of the supply channel, and receptacle, and may further provide parts of vents, and other microfluidic (2-phase) channels, chambers, ports and vents, and possibly other 3-phase chambers and holds. The components of the device are formed into or on the substrate, which can be assembled from disparate parts or 3D printed as a single piece, or joined by over-molding. The device can further include, for example, other examples of the microfluidic check valve described herein for feeding the same receptacle, or other 3-phase holds, other valves, vias for microfluidic channels (pneumatic and/or liquid), blister packs and other burst valves and seals, finger-actuable pumps, and negative pressure sources or ports for coupling thereto. While not necessary in some embodiments, the microfluidic device typically has a top cover, a bottom cover or both top and bottom covers. In some embodiments, the microfluidic device further comprises one or more inserts between the substrate and one or more of the covers, for example luer locks, readout zones, and inspection areas.

The microfluidic chip, which is understood to include at least a substrate and a cover, may define one or more microfluidic networks that implicate one or more GCMs, receptacles, ports, vents, channels, and other microfluidic features. Various channels that interconnect various chambers and/or open externally to an external environment, tubing to other supplies, or couplers to devices like loading pins, micropipettes, or syringes. In some embodiments, the various other channels comprise a plurality of microfluidic channels having d_{HC} values within 10% of that of the supply channel, and in some embodiments the substrate is patterned with relief patterning on two opposite sides, with vias interconnecting the two sides, and the vias have a higher d_{HC} value than segments of channels on the two sides. Each channel may interconnect at least one chamber, including the receptacle, to another chamber, or to a port of the chip. In some embodiments, each port maybe of one of three uses: a liquid supply or extraction port; a pressurized gas supply or extraction port; or a passive vent, open to ambience, and in some embodiments a same port can be used for two or more of these three uses, at different time points in operation. In some embodiments, a majority of the microfluidic channels are defined by segmented pieces, including at least one segment that is characterized as a via, and extends through the substrate to connect two relief-patterned surfaces on opposite sides of the substrate.

In some embodiments, the substrate bears surface relief patterns, including segments of microfluidic channels, on both of two opposite surfaces that are provided for sealed meeting with covers, and in other embodiments, the covers bear surface relief patterns that define (with flat surfaces of the substrate) microfluidic channels, except for vias. In some embodiments, the substrate and cover are bonded together, or adapted to bond together, to define the enclosure. To increase the number of fluidic operations on liquids in the receptacle, in some embodiments, the enclosure comprises the receptacle, the enclosure being defined with a seal between the relief patterned substrate and a cover of the device. In some embodiments, one or more ports of the microfluidic device are provided for coupling to a positive or negative pressure source to move liquid through the valve, or to mix the liquid in the receptacle, or to remove the liquid from the receptacle, for example. In some embodiments, the enclosure covers the receptacle and a pressure port in fluid communication with the receptacle, the pressure port fluidically couplable, or coupled, to a source of negative pressure (relative to ambient pressure). In some embodime-nts, applying negative pressure to the pressure port moves the liquid through the valve into the receptacle, permits bubble mixing of liquid in the receptacle, moves the liquid out of the receptacle, or any combination thereof.

To effect valving, the enclosure needs a seal that permits the receptacle to have a lower pneumatic pressure than the supply chamber, for a duration sufficient to overcome inertia and fluid resistance in moving from the supply chamber into the receptacle, and to grow the liquid on the accretion surface. Capillary effects are second-order in the operation of the GCM.

The cover (bottom surface thereof) may provide a ceiling of the receptacle. If so, the outlet is preferably: sufficiently lower than the ceiling to ensure that the bolus does not contact the ceiling during accretion; or defined in part by the ceiling, so that the ceiling takes part in forming the supply channel, at least at the outlet. Various forming routes make forming channels at interfaces of substrates and covers quite efficient. The latter option has a mixed set of advantages and disadvantages, though mostly beneficial to the reliable operation of the GCM. An undemarcated portion of the ceiling is implicated in the accretion process, and the bolus, during accretion, will spread over the ceiling. In general, the constraints provided by the accretion surface act to limit spread in the horizontal directions over the sidewall, and these constraints discourage spreading over the ceiling in the same vector directions, but in contrast nothing limits spreading in the perpendicular direction, which is generally towards a centre of the receptacle. Thus, there is a tendency for the liquid to spread towards the centre of the receptacle, which further increases the draw of the liquid away from the first sidewall. As the horizontal spread limits constrain flow in two directions, the bolus is prompted to grow in the others, which pulls the bolus towards the centre of the receptacle, as well as vertically up (or horizontally away from the wall) and down. So while the increased surface area of contact, provided by the ceiling, does increase adhesion of the bolus (which in turn requires a greater mass before fall), and also undesirably implicates an edge in the contact surface area, the strong limit on vertically upward movement, and pull that is directly away from a periphery of the top edge of the receptacle, ultimately increases a distance of the centre of mass of the bolus from the first sidewall, which improves shedding. Furthermore, locating the outlet at the interface between cover and substrate is recommended for low-cost chip forming and assembly.

The substrate may be composed of any suitable material. In some embodiments, the substrate material comprises a metal, or a polymeric material, and it may preferably be natively hydrophobic, and remain untreated. In some embodiments, the substrate comprises a thermoplastic material, or a thermoplastic elastomer. The material may be chosen for biocompatiblity, reasonably low reactivity with subject liquids, and preferably not gas permeable. The wide variety of polymers useful for microfluidics are well known. There is a particular use for glass, and transparent plastic, at least for covers, to facilitate viewing of liquid during displacements, and in some cases, for readout and inspection.

The GCM is a one-way valve between the (2-phase) supply channel and the (3-phase) receptacle into which the liquid from the supply channel is being conditionally delivered, and not returnable after delivery. The valve is formed into the substrate at the mouth of the supply channel, and is surrounded, at least on 3 sides, by an accretion surface that receives the aqueous liquid from the supply channel during accretion. The liquid grows to form a bolus on the accretion surface, while the pressure difference aliments the bolus. The bolus grows within an accretion volume bounded in part by the accretion surface. By limiting the spread of the bolus across the sidewall, the bolus is forced to bulge outwardly, which expedites fall of the bolus, principally by decreasing the surface area of contact, which both decreases a threshold bolus size required to overbear attraction to the accretion surfaces by decreasing the adhesion, and by increasing a volume suspended, which forces a centre of mass of the bolus to extend further away from sidewall and the outlet.

The accretion surface is a single (i.e. connected) surface of the sidewall that has a function of prescribing and limiting a direction of growth of a liquid bolus at the mouth of the supply channel, in terms of directions in which the growth is encouraged or discouraged. While various methods of guiding surface movement of liquid are known in the art, these typically require: fine scale surface patterning, selective surface activation, or microfluidic inserts, all of which are possible, but these each have disadvantages in terms of speed and cost of production, and reliability-in particular reliability after long-term storage in low-cost storage conditions. Applicant currently prefers substantially large-scale structural features to provide delimitation of and by the accretion surface, in the form of limit edges. A limit edge is a drop-off or recess that demarcates the accretion surface, as a step, that reduces propensity of liquid to pass from the first (accretion surface) to the riser of the step. As such the angle between the accretion surface and riser should have an internal (measured within the material, as opposed to through ambient media) angle of less than 160° or greater (more preferably less than 145°). It may be inconven-ient for molding to allow the internal angle to be less than 90°, in some forming routes, and nothing necessitates the limit edge being defined at an acute internal angle. It will be appreciated that no forming methods produce mathematically ideal structures, and edges are often the least perfectly formed features. For present purposes, the sharper the limit edges, the shallower the extent of the riser (i.e. a projected distance of the accretion surface from the sidewall) can be, and the less material is needed to project into the receptacle. Invariably, limit edges have some measure of rounding that can be specified by a nominal radius of curvature. The smaller the radius, the sharper the limit edge. To limit spread, the limit edge preferably has a radius of curvature smaller than ¼ the projection distance (i.e., the distance the limit edge is projected into the receptacle from the first sidewall). Thus, the accretion surface guides growth and forma-tion of the bolus, by permitting the liquid from the supply channel to spread over the accretion surface along its full (but limited) extent in a horizontal direction, without texturing, or selectively coating, sidewall parts. Limit edges are provided on both sides of the opening, to pin the bolus to the accretion surface and limit spread in two directions, enabling the pinching of the bolus.

Any limit edges will tend to increase a bulge of the bolus, and therefore should increase propensity for the bolus to fall with lower volume, however it is not equally easy to produce limit edges in every direction. Unless 3D printing is used, it is generally difficult to manufacture a chip with features of internal cavities bearing relief structures oriented in all directions, in a single step fabrication process. It is generally preferable for the limit edge to be provided a distance from the outlet (such as at least a few µm, and more preferably at least 10 µm) to permit an initial bolus to form to a certain size before any limitation is encountered (hence the accretion surface surrounds at least 3 sides of the outlet). That said, the greater a distance of the limit edge from the outlet, the larger a threshold bolus size (i.e. bolus size for which weight overbears adhesion) will be. Barely any pinching effect is possible for most aqueous liquids if the limit edge is 4-5 mm away from the outlet. As such, the limit edge, in accordance with an aspect of this invention, is less than 2.5 mm, and more preferably less than 0.75 mm, away from a centre of the outlet, but is not zero either, to allow bolus growth to a point before the limit edges are observed. The limit edges run vertically, or substantially vertically, and limit horizontal spread of the bolus. A single edge might increase bulging of aqueous boluses on typical polymer substrates, but using two limit edges, each on opposite sides of the outlet, is far more effective. Having only one limit edge leads to variability in how far the bolus spreads in the opposite direction before fall.

The accretion surface can be flat, essentially planar, or simply curved or bicurved, and except for limit edges, the curvatures are preferably shallow in that a radius of curvature at any point on the surface is greater than a peripheral length of the outlet, which is preferred for avoiding any liquid being adhered to the accretion surface after fall. Regardless of such slight curvature, the accretion surface has a mean orientation defined by a normal. The normal may be oriented horizontally, and if so, the accretion surface is a vertical face of the first sidewall, or projected from the first sidewall by the ridge. Herein a 0.25-5° draft angle commonly used to facilitate demolding in some forming processes is considered vertical. While this is a preferred orientation, any negative inclination of the normal is at least as desirable in use, if sometimes more difficult to manufacture. Naturally, as this is a sidewall of the receptacle, it is challenging to provide steep negative angles, and these are not required. A negative angle, in this context, refers to an orientation for which a ray, coincident the normal, meets a horizontal plane of the floor, presumably at a fairly acute or glancing angle. In other words, the normal is directed at an angle below horizontal. While verticality or a negative angle is desired, and can typically be readily formed, in some embodiments it is preferable to use a positive angle, whereby the normal is somewhat above horizontal. It should be noted that at 90° above horizontal, the accretion surface is a ledge essentially parallel to the ground, and this orientation would maximize liquid trapping at the accretion surface, maximally supporting weight of the bolus during formation (and therefore retarding the fall), and provides a least valuable orientation for the present invention. While a 45° angle above horizontal might sufficiently reduce support of the bolus to encourage fall, applicant prefers a maximum of 40°, and more preferably 30°, above horizontal.

A natural way of forming two limit edges is to provide a ridge that extends into the receptacle, by the projection distance. The ridge may be shaped, in horizontal cross-section, as an acute trapezoid (trapezoid with acute angles at long base), oriented with the long base meeting the first sidewall, and the acute trapezoid may be symmetric (isosceles), to provide equal resistance to flow at both sides, and to provide equal jeopardy of consequence to overflowing the limit edge. If liquid were to trespass the limit edges, the liquid would typically assume a form that would hug an increased, and not decreased, surface area, and it is entirely likely, depending on the volume of liquid supplied for the purpose of the chip, that the bolus would be hung there, suspended, and may never fall with the volume supplied, or it might only be amenable to a complete filling of the chamber if more volume were provided. This would make the structure incapable of check valving the supplied liquid.

Note that the ridge may alternatively have a non-trapezoid (i.e. short base not parallel to sidewall), convex, quadrilateral form (in horizontal cross-section) with two same angles distal the first sidewall, which will generally give equal resistance to overflowing, as long as the projection distance, internal angle, and sharpness at both limit edges are sufficient. Furthermore, replac-ing the short base (i.e. front face of the ridge) of an acute isosceles trapezoidal form with a large radius cylindrical inner surface, will formally make the shape non-convex, but it decreases the internal angle at the limit edges in a fabrication-easy modification, and with very little increase in surface area, with a slight reduction in a volume of plastic used. The ridge, away from (below) the accretion surface, has no sensitive properties as far as the GCM valving is concerned, but the ridge below the accretion surface is useful to serve as a slide, to guide tumble of the bolus.

In some embodiments the ridge extends depth wise (vertically, towards the floor) only as far as the accretion surface, and in these embodiments, the accretion surface is demarcated from a slide that extends a rest of the way to the floor of the receptacle. Such a slide preferably has nothing that limits or discourages horizontal spread across the sides thereof, as the fall is relatively quick, directed, and spreading is not of concern. A narrowing of the receptacle below the accretion surface would be one way of avoiding edges of the walls meeting the floor of the receptacle, and the attendant risks of dead volumes associated therewith. The ridge can taper (widen, or shrink) gradually or abruptly, below the accretion surface, and the receptacle can narrow the full extent of the projected distance (i.e., a horizontal cross-sectional area of the receptacle may shrink the closer the horizontal plane gets to the floor). Alternatively, the accretion surface may be an undifferentiated part of the same ridge face (short base surface if trapezoid) that provides the slide from the accretion surface to the floor. In some embodiments, the ridge has a same profile from ceiling to floor, whereby an edge of the ridge of the slide has a same form as a limit edge; but in others, the limit edge gets progressively rounder, or the projection distance shrinks, the further away from the accretion surface, and the closer to the floor. While the word "ridge" has been used, and the "projection distance" is defined, it should be understood that exactly the same structure is defined with reference to two flanking recesses in the first sidewall, on either side of the accretion surface, the recesses extending a recess depth (equal to the projection distance) into the sidewall, as these are geometric duals.

In some embodiments, the outlet comprises a nozzle for changing a velocity profile of liquid passing therethrough, which can be particularly helpful as a final portion of the liquid in the supply channel exits the outlet into the receptacle. The nozzle may constrict or expand the outlet in either or both directions (i.e., width and depth).

While the accretion surface may surround the outlet completely (4 cardinal directions), i.e. if the outlet passes as an orifice through the first sidewall, maintaining the minimum height above the outlet to the floor of the receptacle increases a depth of the chip by the depth of the outlet below a top side of the substrate. This additional height is increased by a distance (about 4 mm) below the top edge of the receptacle that the orifice has to be placed, to avoid interaction of the bolus with a ceiling of the receptacle. In many embodiments, it is more cost effective to locate the outlet at a junction between the cover and chip. This substantially affects operation of the GCM. So, while the cover, in many cases, provides a ceiling of the receptacle, and contrib-utes to the enclosure, the outlet can be: sufficiently lower than the ceiling (4 mm) to ensure that the bolus does not contact the ceiling during valving; or defined in part by the ceiling. While GCM operating is affected by the ceiling, it is not only detrimentally so.

To avoid complications with assembly and formation, an undemarcated portion of the ceiling is provided for bounding the bolus during accretion. While, in principle, the cover could be relief patterned or surface activated over a specific area, to advantageously further constrain growth of the bolus, this has been found to be unnecessary, and doing so would complicate manufacture, increase a number of species in contact with the sample fluid; or require careful alignment with the substrate, while risking issues with sealing between the cover and substrate. With the ceiling partially defining the opening, the undemarcated portion participates in valving. While the ceiling allows the bolus to spread during accretion, and increases surface adhesion of the bolus, it ultimately increases a distance of the centre of mass of the bolus from the first sidewall, in concert with the pinching effect of the limit edges. The extra adhesion provide by inclusion of the edge between ceiling and accretion surface is limited by the short extent thereof. Because the limit edges constrain the bolus from spreading horizontally along the first sidewall and the ceiling precludes spreading upwardly, the bolus spreads freely across the ceiling towards a centre of the receptacle, and downwardly, but far less in the directions of the sidewall than it would absent the limit edges. This GCM admits a tetartospheric-like bolus growth about an axis provided by the interior ceiling/accretion surface corner. Herein tetartosphere is under-stood to be a quarter sphere: a part of a sphere sectioned by two orthogonal half planes that meet at a common diameter of the sphere.

Bolus growth tends to draw liquid away from the first sidewall. The native (typical, untrea-ted) contact angle of polymers will allow for bolus formation in a fairly robust manner. Differences in surface affinities between the liquid for the ceiling as compared with the accretion surface are not as important to valving, because this difference only affects the extent of growth on the ceiling plane as compared with the accretion surface. So long as the limit edges function, a little more or less growth in the ceiling plane relative to the accretion surface, is not likely to greatly impact the threshold bolus size. The pinching by the limit edges, and spread across the ceiling, both draw the center of gravity of the bolus away from the accretion surface. When the bolus has accreted enough liquid so that the weight of the bolus exceeds the adhesion, the bolus falls.

When convenient for forming and assembling the device, one or three sides of the supply channel may be provided by the cover. If three sides are provided by relief patterning of the cover, the supply channel doesn't pass through the first sidewall. It is sometimes convenient to form chips by providing large scale features, like reservoirs and the receptacle (perhaps all 3-phase structures) with one forming technique applied to the substrate, and to reserve formation of smaller scale features (perhaps most, or all 2-phase structures) as relief structures on the cover. While relief structuring of both substrate and cover invariably increases alignment requirements, in practice forgiving structures can be formed with wide tolerances for allowing locations of channels to meet the larger scale structures at any location along the periphery of the larger scale structures. In the illustrated embodiments, one side of the supply channel (at least proximate the outlet) is provided by the cover (having no relief patterning).

The slide is oriented within 30° of vertical when the device is in at least one stable orientation resting on a horizontal surface (in use). In some embodiments, the slide is curved, or the recess comprises a bowl-shaped floor section, which may have a fluidic outlet at the bottom thereof. The slide extends from the accretion volume towards the floor of the receptacle. When the bolus accreting on the accretion surface grows heavy enough to overcome the adhesion holding the bolus, the bolus detaches and tumbles down the slide to the bottom of the receptacle. In some embodiments, the slide extends all the way to the floor of the receptacle. In some embodiments, the slide extends to about a fill level for the liquid in the receptacle. In some embodiments, the slide is 1-3 mm wide, on average. In some embodiments, the accretion surface comprises a vertically oriented trench in the protrusion for guiding the bolus to follow the slide, and the trench may be a V-shaped groove that narrows progressively towards the floor, with the V-shape having an angle of 20-150°.

The supply channel comprises an inlet through which liquid enters the supply channel and an outlet through which liquid leaves the supply channel into the receptacle. The supply channel may locally have an axis that is vertical, horizontal (i.e., perpendicular to the first sidewall), or at any angle therebetween, but there is a marginal preference for the angle to be lower than horizontal, as this may decrease splatter accumulating on the ceiling of the receptacle at an end of the delivery. The supply channel may comprise any number of segments, with different directions, between the inlet and the outlet, and preferably the supply channel includes at least one via segment that couples relief patterning on opposite sides of the substrate, and preferably the two relief patterned sides of the substrate. Preferably one of the two relief patterned sides meets a bottom cover that defines the floor, or is within 10% of a thickness of the chip from the depth of the floor, and the other provides a top meeting surface for a top cover. In some embodiments, the supply channel includes at least one serpentine channel segment (horizontally or vertically oriented) for slowing liquid flow through (increasing fluidic resistance of) the supply channel. In some embodiments, two or more supply channels share a common outlet. In some embodiments, if, for forming reasons, minimum dimensions of the supply chan-nel are greater than the desired d_{HC}, meets of the segments can have reduced d_{HC} (such as via segments formed by larger diameter pins than desired for the supply channel.

The liquid may be supplied to the supply channel by any suitable means. In some embodiments, the liquid is supplied through the inlet by a microfluidic blister or a finger pump under action of positive pressure. In some embodiments, the microfluidic device further comprises a supply chamber, for example a vented supply chamber, for containing the aqueous liquid upstream of the supply channel, the supply chamber in liquid communication with the inlet of the supply channel. In some embodiments, the supply channel extends between the inlet at or proximate a floor of the vented supply chamber to the outlet above the inlet at or proximate a top of the receptacle. The floor of the supply chamber and receptacle preferably differ by less than 10% of the substrate's thickness.

The receptacle has a floor and at least the first sidewall. In some embodiments, the receptacle defined by the substrate has an open top, however typically, the receptacle will have a ceiling, or the substrate will be covered to provide the ceiling. In some embodiments the ceiling comprises a lower surface of a cover that covers the chip. In some embodiments, the microfluidic device comprises a plurality of the microfluidic check valves and respective supply channels for feeding a plurality of liquids into the receptacle, which is common to the plurality of the microfluidic check valves. In some embodiments, two or more of the plurality of microfluidic check valves open into the receptacle on the same sidewall. In some embodiments, two or more of the plurality of microfluidic check valves open into the receptacle on different sidewalls. In some embodiments, the microfluidic device comprises a plurality of receptacles with respective GCMs: the receptacles are interconnected by microfluidic channels in some embodiments.

A method for operating a GCM in a microfluidic device is also provided. The method involves: applying a pressure difference between first and second ends of a supply channel in the microfluidic device, to move a liquid from the first end towards the second end, which terminates near an outlet to a receptacle of the microfluidic device; providing at least one accretion surface proximate the outlet to limit contact surface area of the liquid from the outlet during formation of a bolus, the at least one accretion surface drawing a center of mass of the bolus away from the outlet, until the bolus grows to a critical weight and volume that overbears adhesion to the accretion surface; and providing space for the bolus to fall under gravity to a floor of the receptacle a distance of at least 5.5 mm. The receptacle dimensions preferably accommodate the critical volume of the bolus so that the outlet is separated from a free surface of the receptacle after fall by at least 2x a radius of the bolus of threshold weight and volume, preventing back flow from the receptacle through the supply channel.

Beneficially, the two-sided relief patterned substrate with vias can substantially define the GCM, and covering the substrate at both surfaces creates a chip with the GCM. A microfluidic device including the chip, is: simpler in design; requires no surface activations; is amenable to large scale manufacturing; permits reliable checked valving; and exhibit high resistance to backflow, with very little energy or control equipment. In operation, the GCM is effective at eliminating bubbles entrained in the supplied liquid, and can offer very low dead volume losses. The receptacle can incorporate metering or bubble mixing capabilities.

Further features will be described or will become apparent in the course of the following detailed description. It should be presumed that each feature described herein may be utilized in any combination with any one or more of the other features, and that features do not rely on the presence of any other features except where evident to one of skill in the art.

### Brief Description of the Drawings

For clearer understanding, preferred embodiments will now be described in detail by way of example, with reference to the accompanying drawings, in which:
FIG. 1A depicts an embodiment of a substrate (cover removed) featuring a GCM between a supply chamber and a hold, in accordance with a first embodiment of this invention;
FIG. 1B i-vi is a strip of six illustrative steps schematically showing cross-sectional views of a chip with a GCM in accordance with a second embodiment of this invention;
FIG. 1C depicts a magnified partial view of a third embodiment of the substrate (cover removed) bearing a GCM in accordance with this invention, in a state of FIG. 1B ii;
Fig. 2A depicts a perspective view of a fourth embodiment of a substrate with six GSMs, specifically with three, two, and one GSMs at three respective holds;
FIG. 2B depicts a top plan view of the substrate of FIG. 2A;
FIGs. 3A-F depict enlarged perspective views of five GSM variants in substrates;
FIGs. 4A-H depicts cross-sectional views through sidewalls of holds showing various layouts including variations of sidewall orientation, as well as supply channel outlet position and orientation, in accordance with variants of this invention;
FIGs. 5A,B depict a longitudinal cross-section, and top plan view (cover removed), of another substrate bearing a GCM, which incorporates a metering array;
FIGs. 6A,B depict a substrate patterned to define a GCM, provided in an interior sidewall of a reservoir, respectively in perspective, and a perspective cross-sectional, views; and
FIGs. 7A,B,C depict a substrate patterned to define a GCM, provided in an interior partial elevation sidewall of a reservoir, respectively in top plan, perspective, and side elevational cross-sectional, views.

### Detailed Description of Illustrative Embodiments

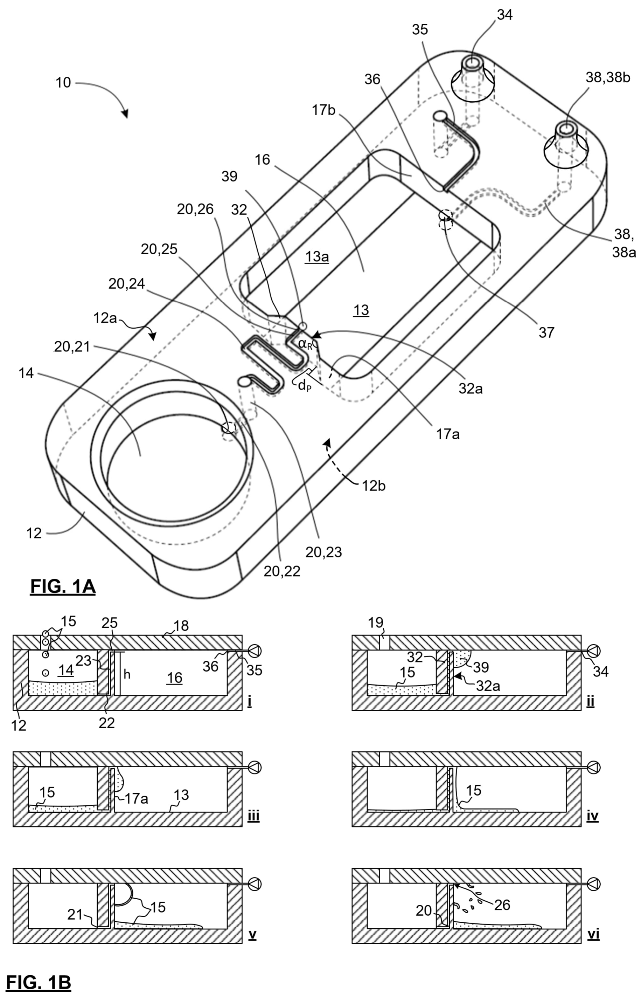

FIG. 1A shows a relief patterned substrate **12** (which when sealed against a cover, removed for viewing) produces a microfluidic chip **10** with a gravitationally checked (and also gravitationally actuated) microvalve (GCM). The relief pattern is shown in solid line, where in view, and in dashed line (ghost view) to illustrate subsurface features: accordingly, most features on a top surface **12a** are shown in solid lines, and all of the patterning on a bottom surface **12b** are shown in dashed lines. The substrate **12** is amenable to various covering strategies, including with two films or sheets that cover the top and bottom surfaces **12a,b,** with the top film covering all negative relief structures, but not posts of tube couplings.

The relief patterning provides free spaces that define: a supply chamber **14,** a hold **16,** and a supply channel **20** fluidically connecting supply chamber **14** to the hold **16.** The hold **16** has a floor **13,** and 4 sidewalls, including two opposite sidewalls **17a,b.** As shown, the supply channel **20** passes through sidewall **17a.** Herein the word 'hold' or 'receptacle' refers to free space provided within a chip that is somewhat generalized from typical microfluidic chambers known from 2-phase fluidics. Microfluidic chambers, are generally enlarged openings of microfluidic channels, and are typically filled, empty, or a fill state therebetween. While they may have numerous structures or features built into them, they have typically a paucity of states and few inlets and outlets, in comparison with 3-phase fluidics. A hold or receptacle can have a floor partitioned with different features and can have multiple distinct spaces for microvolumes that remain separate until moved or volume is increased, to allow for contact of the microvolumes.

The chip **10** defines a GCM by tailoring an outlet **26** of the supply channel **20** in a way that limits spread (allows some spread, but limits extent) of the liquid across a surface of the sidewall **17a,** preferably as shown in two opposite horizontal directions to pinch the accreting liquid. The pinching prompts a bolus **39** (the accreted liquid) to bulge from the outlet **26,** reducing threshold bolus size that are check valved, generally enhancing reliability, by reducing contact area. The GCM regulates liquid flow from the supply chamber **14** through the supply channel **20** into the hold **16.** Covering the surfaces **12a,b** produces a microfluidic chip **10,** sealing the chamber **14,** hold **16** and channels to define pressurizable enclosures. The chip **10** comprises a vent (not in view, but can be provided as a through-hole in the top cover, or by relief patterning the top cover to couple a side port with the chamber **14** by a vent channel). Liquid can be loaded into the supply chamber **14** with the top cover removed, or peeled back, via a puncturable area in the top cover, or via an additional post for coupling to a supply tubing with attendant channel. Furthermore, in some embodiments the supply chamber **14** has no cover, as the time between filling the chamber **14** and drawing vacuum to valve the liquid can be short, and a large surface may be desired for convenient loading with untrained users. Note that the chamber **14** can be located on another chip or vessel instead of on this chip **10,** and the GCM can work in the same way. There are advantages in control of the GCM if the supply channel **20** exhibits fluidic resista-nce, to slow and regularize flow. Fluidic resistance is provided with constrictions, serpentine channels, and vertical rises in the supply channel **20** in some cases. As shown, the supply chan-nel **20** includes a rising segment that extends vertically a distance h (see FIG. 1b) equal to the separation of the floor **13** of the hold **16** to outlet **26,** and further comprises a serpentine segment.

The supply channel **20** is segmented, in 3 parts both functionally, and by layout: the first (intake) segment **22** is provided by relief patterning of the bottom surface **12b** between a meet **21** with supply chamber **14** (provided by a short via), and a (full substrate) vertical via **23;** the via **23** is a second (rising) segment; and the third (exit) segment **25,** is provided by relief patterning of the top surface **12a,** extends between the via **23** and outlet **26** for delaying flow, and regularizing supply. The exit segment **25** includes a serpentine part **24.** The meet **21** is located in a floor of the supply chamber **14** at a cylindrical sidewall thereof, nearest the hold **16,** although any spot on the periphery, (or centre bottom of a bowl-shaped supply chamber **14)** would be equivalent. The meet is provided as if by bore through the substrate from the bottom surface **12b,** the centre axis of the bore being offset from the cylindrical wall such that a far smaller cross-sectional area, than the bore's diameter breaks through the floor of the supply chamber **14.** This is a convenient way to reliably control hydraulic diameter of the meet **21,** for designing a resistance through the channel **20,** and reducing dead volume loss in the supply chamber **14,** under low pressure draw. This offset pin (from side wall of chamber **14)** forming of the meet **21** forms a high reliability chip with lower resolution pins.

The supply chamber **14** preferably has a canted floor, or is otherwise deepest near meet **21,** if dead volume in chamber **14** is to be avoided. As some samples have, or might have, dense enough particles that are not desired to be ingested, and these can fall out of suspension under gravity, drawing all of the volume from the supply chamber can be avoided. The supply chamber **14** as shown, is large and deep, which is facilitates loading, but is not necessary for all cases. The supply chamber **14** may as well be deep, such as almost as deep as the floor **13,** so the supply channel **20** includes a riser section that requires a pressure difference to draw the liquid through the GCM. The vertical rise of the riser section (as high as h) can be easily provided by patterning both surfaces **12a,b** of the substrate, and providing full depth vias therethrough.

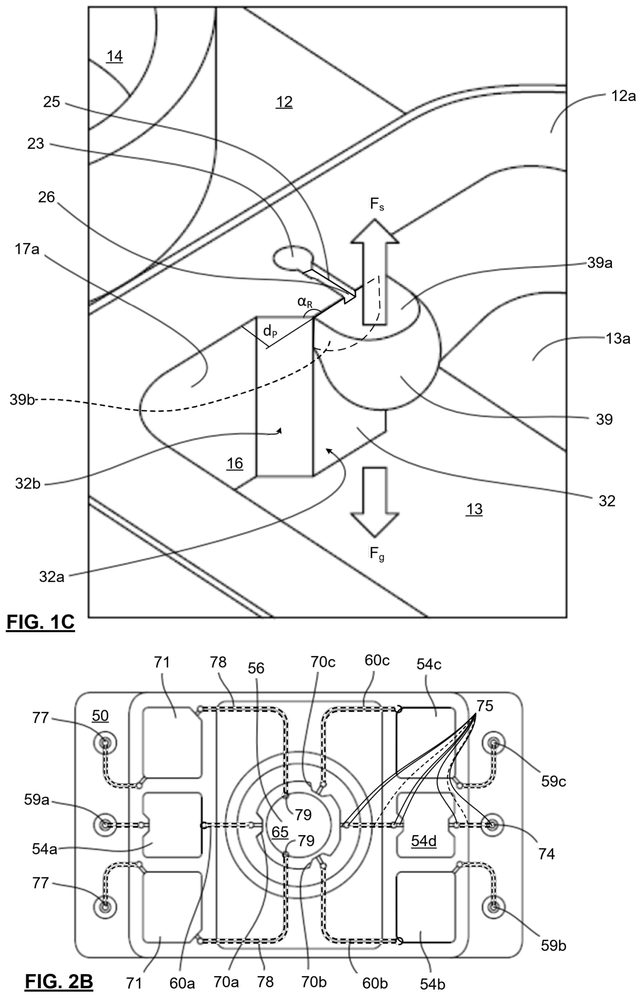

In use, a pressure differential between free space of the supply chamber **14,** and hold **16,** draws liquid through meet **21** into an intake segment **22** from where the liquid flows up via **23,** and then through exit segment **25,** passing through the horizontally oriented serpentine part **24,** toward the outlet **26** which passes through sidewall **17a** at top surface **12a.** FIG. 1A shows accumulated liquid, bolus **39** formed at the outlet **26.** Specifically, the bolus **39** is formed, at least in part, by contact with an accretion surface that surrounds the outlet **26** on at least 3 sides thereof. As shown, in use, a ceiling of the hold **16,** supplied by the top cover, modifies the shape and spread of the bolus **39.** The ridge **32,** as shown, extends a full depth of the sidewall **17a,** although the accretion surface occupies only a localized part of the front face **32a,** around the outlet **26** (as better shown in FIG. 1C).

Liquid exiting the outlet **26** tends to ball up, as shown, and then the bolus **39** grows, alimented by the supply of liquid, adopting a generally tetartospheric shape (as the outlet **26** lies at the ceiling of the hold **16),** until the bolus **39** has spread to a limit of the accretion surface. If outlet **26** had been provided as an orifice through the sidewall **17a** (substantially below the cover meeting edge of the substrate **12)** the bolus **39** would assume a hemispherical shape, and meet only the accretion surface that surrounds the orifice. Once the bolus **39** to be constrained by limits of the accretion surface, and becomes pinched. In the absence of a spatial limitation provided by the accretion surface, the bolus will grow as a tetartosphere/hemisphere until it encounters an edge with a second sidewall, adjacent the first sidewall **17a,** or the bolus grows to droplet dimensions (r > 5 mm if aqueous). Encounter with the second sidewall is likely to require the bolus to grow even larger before fall. Encounter with the floor precludes any fall, and likely makes the structure incapable of check valving; rather the liquid will only, gradually or progressively fill the whole volume, as is regularly observed in 2-phase microfluidics. To grow the bolus to droplet dimensions, requires supply of a volume that is larger than desirably dispen-sed. So even if the structure without spread limiting features of the accretion surface can enable liquid to drop, and therefore check valved, the spread limiting features permit smaller volumes to be reliably dispensed. Thus, to avoid the droplet being hung, either a very large span (free of adjacent side walls) needs be supplied around the outlet **26;** only liquids other than aqueous liquids (without surfactant) can be valved; or only larger volumes can be dispensed. The present invention avoids these limitations by providing spatial limits to the spreading.

FIG. 1A further comprises a suction line **35,** again segmented, extending through side**wall 17b** at the top surface **12a,** but with two full thickness vias, the second of which terminating through a post at port **34.** This suction line permits a low-pressure pump to operate the GCM, with a sample collection port **38b** closed. A sample collection line **38** is provided from the floor **13** to the sample collection port **38b** for supplying the reactant for subsequent processing (which can be drawn from the sample collection port **38b** with a pipette, syringe, or the like). The sample collection line **38a** includes: a single full thickness via, and an extraction segment **38a** provided by relief patterning on bottom surface **12b.** The extraction segment **38a** extends from a hold outlet **37** at the floor of the hold **16** near the second sidewall **17b** to the full thickness via. The hold outlet **37** meets the extraction segment **38a** at a short via. The floor **13** is sloped down-wardly from sidewall **17a** to **17b,** to draw hold liquid to the extraction channel **38a.** The hold **16** also has side ramps **13a** that limit spread of liquid over the floor **13.** Alternatively, or addition-ally, a premetered volume of liquid can be injected into the hold **16** through the sample collection line **38,** either before, during or after the GCM operation.

As long as there is sufficient liquid in the hold **16,** and the slope is sufficient to maintain the liquid to cover the hold outlet **37,** and as long as the vent at supply chamber **14** is blocked, the structure provided by the hold, sample collection line **38,** and suction line **35,** is identical to Applicant's co-pending GB 2413861, entitled: Microfluidic Device with Bubble-based Micromixer the contents of which are hereby incorporated by reference. Note that a same range of negative pressures applied by a suction device of the present invention, has been found to allow for bubble mixing by drawing air from the suction line, through the sample collection line **38,** so long as the opening to the port of the sample collection port **38b** is vented, or open to ambience.

While the chip provided by covering substrate top **12a** and bottom **12b** is a relatively simple device, that permits one or more liquid samples to be delivered into the hold **16,** optionally bubble mixed, and then retracted therefrom, it will be appreciated that the GCM shown in this simple device, can be used in far more complicated devices, including those capable of execu-ting higher complexity protocols, including assays with multiple fluidic manipulation steps.

FIG. 1B is a panel showing 6 states (i-vi) of a microfluidic device shown in longitudinal cross-section. The device is shown with a pump coupled to a chip similar to that of FIG. 1A, the chip consisting of a substrate **12** and a cover **18.** Herein like reference numerals denote like features in respective sets of drawings. Use of different reference numerals in different sets of drawings does not imply non-analogy of features, but is used to avoid restatement and redundant qualifications of the like numbered elements within respective sets.

It will be noted that the substrate **12** of FIG. 1B is not identical with that of FIG. 1A, but is rather simplified and made more compact. E.g.: a separation of the supply chamber **14** and the hold **16** is shown too small to afford a serpentine part of the still triply segmented supply channel **20 (22, 23, 25).** The via **23** extends through the ridge **32** and the supply chamber **14** may also be nestled within the ridge to allow for this close proximity in cross-section, and fluidic resistance can be provided by requiring the liquid to go up and down and up again through 3 vias, in similar embodiments. The suction line **35** is very short, in comparison with the first embodiment, and is straight. A disadvantage of a short, straight suction line **35** is that tiny volumes of splatted liquid, or an incorrect orientation of the chip can lead to liquid being ingested by the pump. Some pumps can tolerate this, and couplings to pumps can also designed to bar droplets entering the coupling from pump ingestion. Even without an explicit liquid trap the two-via suction line **35** of FIG. 1A, globules of liquid are unlikely to either block the suction line, or flow with air through sharp bends in the path. The bottom cover is shown monolithically formed with the substrate **12,** which could be formed for example by 3D printed or other additive, or subtractive manufacturing process, or by welding a cover to an injection molded, or micromach-ined, substrate. A loading port and vent **19** is shown as a through-bore in the cover **18;** no samp-le collection line is in view; and no side ramps **13a** are provided. Despite differences, FIGs. 1B provides valving and checking in the same manner as other GCMs. Also note, intake segme-nt **22** of supply channel **20** passes sideways, as opposed to vertically downward, as in FIG. 1A.

At state i, liquid is loaded into the supply chamber **14** via loading port and vent **19.** This loading step is strictly prior to valving, but is included for context. The full range of mechanisms can be used for loading one or more miscible or immiscible aqueous liquids **15,** including loading pins, syringes, medicine droppers, pipettes, micropipettes, as well as ejection-, aspiration- and contact-based devices, of a wide range of volumetric accuracy. Furthermore, a vacuum dried sample or reagent, other solid or pasty solute (fully or partially lyophilized) may be retained on a floor of the supply chamber **14** for long term stability in the chip, and fast dissolution in the supplied liquid **15.** State i shows the last few droplets being loaded. In typical examples this volume can be as much as a few mL, and substantially less. For typical aqueous solutions, the minimum volume is about 10 µL, for a well characterized liquid, but might be chosen to be 12-15 µL, for reliable valving of a larger range of liquids, accommodating for a wider range of contact angles that can arise with humidity or aging of plastics, or the liquid. Valving 1 mL or more would not typically need spatially delimited accretion.

The state i figure also shows a critical feature of the present invention. The height h of the hold **16** is required to exceed a maximum bolus size, and the growth preferably does not meet any corners or edges about which the bolus can cross (other than the one short edge above the outlet **26,** between ceiling and sidewall **17a).** Otherwise, instead of decreasing bolus adhesion, the bolus would have to grow substantially bigger before its fall. It should be noted that Applicant has successfully produced GCM structures that work reasonably well with minimum volumes in excess of a few hundred µL, without edge-limited accretion surfaces, but it generally takes deeper and larger holds **16,** or the use of hydrophobic coating or activation of the covers, which is difficult for many use cases. An angle of ridge **32** (α_{R}), and a distance the ridge measures from the sidewall **17a** (d_{P}), are chosen so that the bolus **39** does not traverse limit edges of the ridge during growth. While α_{R} in FIG. 1A is shown to be ~120°, in accordance with the invention it can be from 60° to 135° where forming allows, and most expectedly between 90° to 130°. While in FIG. 1A, d_{P} is shown to be about 3x a width of outlet **26,** and should be about 9x the minor axis of the outlet 26, it can be only 5x the minor axis in this embodiment, and less again if the ceiling isn't used to support the bolus **39.**

Once sufficient liquid **15** is loaded, low negative (relative to ambient) pressure is applied in the free volume of hold **16,** e.g. by actuation of the suction pump (shown coupled to port **34).** The pump can be any of a wide range of low cost, low pressure, portable, pumps known in the art, preferably adapted to apply a low-pressure difference between the chamber **14** and hold **16,** such as a difference of less than 15% of ambience, and most advantageously, a pressure of 0.65 to 3.5 kPa below ambience. The pump may actively apply suction from after sufficient volume of the liquid **15** is loaded until state vi. This suction gradually siphons the liquid through the supply channel **20,** rising against gravity in the via **23.** The liquid exits the outlet **26,** as a tiny volume of nearly exactly tetartospheric shape, as deformation by gravity being negligeable. The tetartospheric shape begins to be perturbed by the time that the bolus **39** expands to meet limits of the ridge **32.** Thereafter the accumulated liquid **39** creeps across the ceiling, and downwardly, along the ridge, increasingly deforming the tetartospheric shape, which is said to be pinched.

By state ii, the bolus **39** is near a maximal size. State ii shows a cross-section of the pinched tetartospheric shape, with spreading to be imagined over the accretion surface constrained at two edges of the protruding ridge **32,** and free spreading over a ceiling provided by cover **18.** As the view is in centre-section, little detail of this cross-section differentiates the bolus **39** from a pure tetartosphere, but a better view is provided in FIG. 1C. To enhance the pinching, the edges preferably have a horizontal separation that is less than 5 mm, which can be easily and reliably formed with various forming methods. Applicant has found that a separation of 1.25-3 mm, and particularly 1.5-2.5 mm separations work well. While the ceiling itself has no spread-limiting feature, the ridge edges influence the overall shape of the bolus **39.**

The liquid's rheology, and affinity to the accretion surface and ceiling, and spacing of the limit edges of the accretion surface, determine the threshold bolus size to initiate fall. A GCM can be designed for a variety of liquids having different variability of ranges of contact angles, for different minimum volume valves.

Note that video imaging at a very high rate would be required to capture fluid dynamics of tiny boluses (8-12 µL) such as shown (and side elevation imaging in chips is all the more difficult), and thus the images are schematic and believed reasonable, but cannot be said to be exact, especially in respect of states iii, vi.

State iii freezes a moment in a substantially instantaneous redistribution of liquid after a weight of the bolus **39** overbears adhesion, and the liquid falls. Contact of liquid **15** on the front face **32a** leads to a tumbling motion, in tandem with an upwards pull of bulged volume by cohesion of the liquid (the bulge shrinking as the bolus the falls), until part of the bolus meets the floor **13.**

The moment the accumulated liquid **39** falls, the balance of forces changes, and resistance of the flow through the supply channel **20** drops. Growth of the bolus **39** stored potential energy that was taken from flow energy, and therefore served as a resistance to the liquid flow; but the fall releases this energy. In the device as shown, after fall, a wetted path extends from the outlet **26** down the slide to the floor, and cohesion, after and during fall, favour a faster flow of the liquid **15,** that no longer conforms with a bolus shape. The adhesion with the ceiling broken, the weight drawing the bolus downward, and surface tension rapidly reshaping the bolus, the liquid **15** changes rapidly. A trickle of liquid, pulled by cohesion thus expedites liquid passage through the channel **20** and outlet **26,** after and during fall, as shown in state iv.

It is only when the trickle of liquid is broken that the liquid is formally checked. This can be accomplished by reversing pressure in the hold **16,** i.e. by applying a small positive (relative to ambient) by the pump, if it is desired to deliver less liquid **15** than held in the supply chamber **14,** for example. If instead, the negative pressure is simply withdrawn, the surface energies of the two ends of the liquid **15** (in the hold and supply chamber, respectively) have a tug of war game that will allow for liquid to be fully retracted, back into the supply chamber or fully delivered into the hold, unless the hydrodynamic resistance through the channel overbears the urgings of surface tensions (which is typically the case), or the urgings are strong enough to cleave the droplet (which could happen if the liquid has reduced surface tension). The liquid **15** then meets the floor and spreads out, but perhaps not quite as quickly as shown in state iv.

Depending on how much more of liquid **15** is supplied than a minimum volume, the liquid will flow under the sustained pressure difference for a duration, as shown in state iv, with the liquid depleting from supply chamber **14,** and flowing into hold **16.** The status of this valving is incomplete at state iv, as an abrupt stop of the suction at this juncture does not provide checking, and the liquid **15** can backflow, for example by application of negative pressure at the supply channel, but not by positive pressure at the hold, which would typically shear the liquid at the opening **26.** If the suction were withdrawn, the liquid will remain frozen in this state (assuming resistance overbears the difference in surface tensions of the two ends of the liquid), or if surface tension differences dominate the liquid might backflow or rebalance like a scale between the two volumes, or further the difference in surface tensions could lead to shearing. Shearing is most likely to arise at the outlet **26.** In general, the GCM valve operates with pressure applied continuously until the volume is completely delivered, and valving is complete.

While many 2 phase fluidic valves are extremely sensitive to air bubble entrainment, in that even one air bubble of critical dimension can lead to erratic behaviour of valves, the present invention has been found to be remarkably insensitive to air bubbles. In fact, in almost every example performed, the liquid **15** entrains bubbles when the last bit of liquid is drawn into the supply channel **20** (at meet **21)** that burst in a manner that surprising leaves very little dead-volume residue at the accretion surface or ceiling.

As liquid **15** flows through the GCM, it forms a puddle in the hold **16** as shown in state iv. With the emptying of the supply chamber **14** of the liquid (state v), the trickle, is starved, and eventually the surface adhesion vs. cohesion does not allow for the trickle to continue. At this juncture the liquid spreads around the accretion surface, and typically entrained air bubbles coalesce. As the pressure differential is maintained, the air bubble grows to a substantial extent, and then bursts. While most of the liquid splatter falls onto the pooled liquid below, some might be entrained towards the suction line, before falling, but very little appears to remain on the accretion surface, or ceiling.

By state v, the gravitational checking and valving is accomplished, as the trickle has been shorn from the pool. The last film of liquid **15,** drawn together by cohesion, forms a membrane around the outlet **26,** is blown up like a bubble, and then bursts (state vi), while cohesion has substantially pulled the remainder of the liquid from the sidewall **17a** to the pool on the floor **13.** As noted above, it may be preferable to avoid entrainment of this splatter into suction channel **34.** Having the height h of at least 5.5 mm avoids contact between the bubble and pool. The hold **16** also has a free space around the outlet **26** to ensure that the bolus **39** (and the bubble) does not contact other sidewalls, thereby frustrating the surface spreading limitations otherwise provided by ridge edges. These limitations call for an enlarged hold, which generally requires more volume of polymeric material to form, but this is almost the only downside to this valve, which permits controlled and checked valving, for a range of liquids, particularly of small volumes.

A vent **19** to the external environment of the supply chamber **14** ensures flow of the liquid from the supply chamber **14** under the negative pressure in the hold **16.** The negative pressure is preferably in a range of -0.65 to -3.5 kPa. Once the desired amount of liquid is valved the negative pressure, a second liquid can be loaded into the supply chamber **14,** and valving can be repeated. Furthermore, the pump can be switched off for a duration for chemistry to take place (incubation, thermodynamically controlled reactions, or other reactions, such as RT-LAMP amplifications), or the suction can remain, while a port at the supply channel is blocked, to produce bubble mixing within the hold. The GCM requires no membrane or pneumatic control line over a membrane, and so provides a simple, manufacturable valve structure.

By maintaining the pressure differential during liquid transfer and by locating the outlet **26** well above the liquid level in the hold **16,** the GCM functions as a check valve (i.e. one-way valve: preventing backflow of the liquid from the outlet **26,** to the meet **21** of the supply channel **20,** after valving is complete (trickle is shorn) whether or not the negative pressure is applied through the first negative pressure port **36,** or even if the pressure difference were inverted (to draw air from the suction line **35** to the supply chamber **14).**

FIG. 1C depicts a third example of a substrate **12** (cover removed) with an incidental layout that differs from that of FIG. 1A, or 1B, in an enlarged perspective view centred on the bolus **39.** This view better illustrates a shape called herein a "pinched tetartosphere". Mostly inconsequential differences (for present purposes) between this embodiment of the substrate **12** include a plurality of top surfaces **12a** for meeting the cover, including one surrounding the hold **16** (labelled), though a second top surface is in view surrounding the supply chamber **14.** This second top surface is at a different elevation than the labelled top surface in some embodi-ments, calling for multiple covers, and is at a same elevation to allow for a single cover, in others.

The illustrated supply channel **20** is segmented in the same manner as before, but has a serpentine part on the bottom relief patterned surface, instead of the top relief patterned surface, and is set back from outlet **26** a depth greater than d_{P}. Ergo the via **23** is intermediate the positions of FIG. 1A and B. Like FIG. 1A (unlike 1B) the via **23** has a larger diameter than width (and presumably depth) of the other segments of the channel.

The bolus **39** has a globular free surface, surrounded by the (partially rarified) gas in hold **16,** away from two edge-adjacent plane surfaces: one provided by the ceiling (not shown), which is labelled as ceiling contact area 39a; and the other defined by the accretion surface **39b.** Note that in other embodiments the accretion surface is not planar, but advantageously has a low curvature (e.g. radius of curvature at least 5x, preferably about 20x a minor axis of the outlet **26)** concavity so as to increase the angle α_{R}. A flat ceiling is preferred for ease of assembly of the cover on the substrate for adequate sealing. Ceiling area **39a** is provided by the cover (not in view), and the accretion surface **39b** is shown in overlain dashed lines as an undemarcated part of the front face **32a** of the ridge **32.** The differences between the shape of the bolus **39** at the two plane surfaces attests to the differences in constraints (and degree of divergence from a tetartosphere): the shape of the bolus at the ceiling area **39a** is rounder, and of lower mean curvature and is generally larger, than that at accretion surface **39b.** Bolus **39** has a centre of gravity that extends further away from the sidewall **17a,** (more directly from the front face **32a),** than it would but for the pinching of the liquid by the spread-limiting edges.

As labelled in FIG. 1C, the ridge **32** has a front face **32a,** and two side flanking faces **32b** that form an isosceles trapezoidal shape in horizontal cross-section. The ridge **32** protrudes from the sidewall **17a** from the top **12a** to the floor **13,** and a lower part of the front face **32a** (i.e. below the accretion surface **39b)** is a slide for guiding tumble of the liquid. The slide is not strictly necessary for the valve, unlike the separation between the accretion surface and floor, and the slide could narrow, widen, or could be angled to rejoin the sidewall **17a,** effectively terminating the ridge, or extend further out from the sidewall.

The bolus **39** is held throughout its growth, by adhesion at the two plane surfaces. When the bolus **39** accretes sufficient liquid a gravitational force **F_{g}** exceeds a net contact adhesion force **Fₛ,** the bolus peels from the plane surfaces and tumbles (slides and rolls) down the slide to the floor **13.** Fall and subsequent valving are shown in FIG. 1B, and described hereinabove.

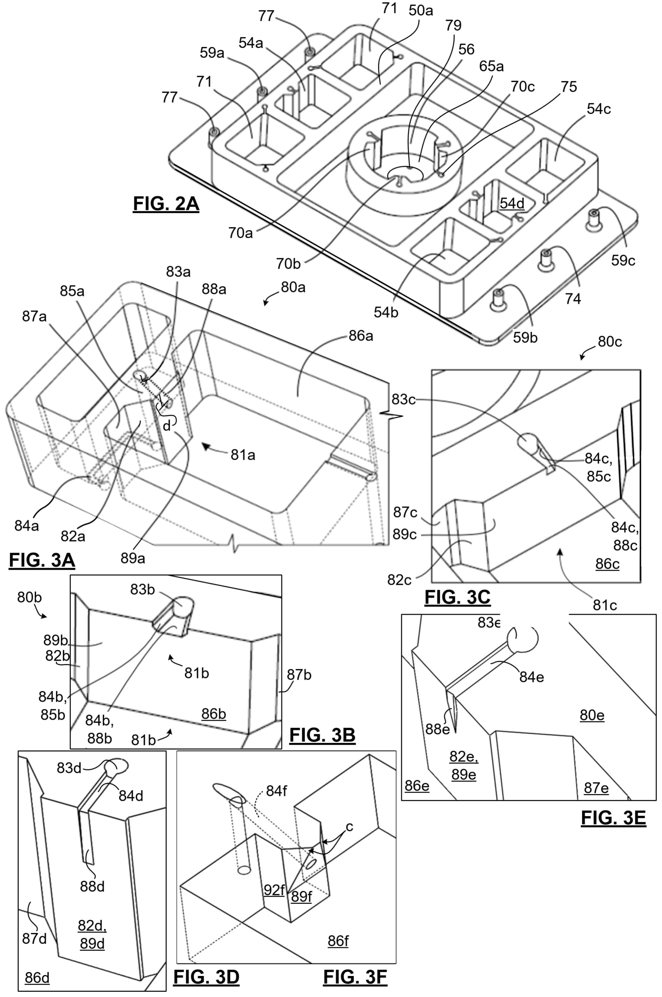

FIGs. 2A,B depict another embodiment of a relief-patterned substrate **50,** adapted to provide a range of protocols, using multiple GCMs, with the cover removed. To provide a substantially complete view of the fluidics, FIG. 2B shows in ghost view various channels that are provided on a bottom surface-relief pattern of the substrate **50,** whereas FIG. 2A shows the top surface relief pattern (which is a much deeper relief patterning). Substrate **50** has a similar separation of the hold from other chambers (such as the supply chamber(s)) as shown in FIG. 1C but is suited for single top and single bottom planar covers. Like FIGs. 1A,C, a floor **65** of the hold **56** has sloped side regions **65a** to encourage flow towards the floor, and away from peripheral edges of with the single, cylindrical, sidewall, but as the hold is now cylindrical, the side regions **65a** is conic. As a result of the conic side ramps, ridges **70a-c** only protrude from the sidewall part of the way to the floor of the hold **56.** The ridges **70a-c** have a front fact that provides the spatially limited accretion surface and a slide therebeneath, and limiting spread of the bolus. Like FIG. 1A, the hold has a channel passing through the floor (two in fact) through which a mixture can be extracted from the hold (and or gas can be entrained for bubble mixing).

Substrate **50** comprises a plurality of supply chambers including first to third supply cha-mbers **54a-c.** Each supply chamber **54a-c** has a respective supply channel **60a-c,** and provides a respective GCM for delivery to a common hold **56** (e.g., a reaction chamber). Each of the supply chambers **54a-c** is also associated with its own controllably vented port **59a-c,** which may be controlled by a 3-way switch that allows the port to be closed, open to ambience, or open to a liquid supply (either by a 3-way valve structure, or by a series of 2-way valves, for example). By closing vents at all of the ports **59a-c** except one, that one port is activated for drawing liquid into the GCM. By providing different paths, various fluid samples, liquid reagents, a wash buffers, solvents, developers, etc. can be supplied in multi-step protocols, without risk of cross-contamination, but any supply channel can be used for different liquids in sequence. Alternatively supplied liquids can be injected into each of the supply chambers with the cover removed, and then sealed by a cover, in which case the ports **59a-c** each can have a simple two-way valve that is either open to ambience, or closed, and is used to block airflow as a means to control fluid displacements. The ports **59a-c** can be independently controllable to open and close so that the different liquids can be delivered into the hold 56 at different times, or they can mechanically be coordinated, for example, to ensure that at most one port is open at a time (avoiding a race condition where two liquid samples are drawn towards the suction at once).

The hold **56** is in fluid communication with a first port **74** through a first suction line **75** that is best understood as a pathway through the chip consisting of: of a first top surface **50a** channel through a rim of the hold **56** extending from the hold **56** to a first via; the first via; a first bottom surface (not in view) channel coupling the first via to a second via; the second via; a second top surface channel from the second via to a fourth reservoir **54d;** fourth reservoir **54d;** a third top surface channel from the fourth reservoir **54d** to a third via; the third via; a second bottom surface channel from the third via to a fourth via; and the fourth via to first port **74.** The second and third top surface channels, and reservoir fourth **54d,** collectively form a splatter trap that precludes any entrained liquid from the first top surface channel from being ingested by a suction pump coupled at first port **74.** If some volume of liquid is ingested, the trap limits splatter from entering the third via, the trap includes two structures that resemble GCMs (and may be used as such for other steps). For example, the first port **74** may be coupled to other fluid supplies before or after decoupling of the suction pump, and allow for controlled, low-volume check valving of liquid into the reservoir, which can be mixed with other fluids, but has no means for withdrawing any fluid in the chip as shown, unless the fourth reservoir **54d** is completely filled.

When the first port **74** is connected to a source of negative pressure, operation of the source draws fluid (e.g. air or another gas) from the hold **56,** which becomes negatively pressur-ized (relative to ambience). With all ports in a closed state, but suction applied at **74,** any liquid in supply chambers **54a-c** (that cover the meets with respective supply lines **60a-c)** will be drawn into the respective supply line, until pressure is balanced between the free space of the supply chamber and the hold **56.** By providing one via in supply line, the liquid will prime and wet a fraction of the via, but cannot reach the respective outlet to the hold 56, thus premature delivery of the liquid is avoided. The chip provided with the patterned substrate of FIGs. 2 is more typically used with the suction only applied at first port **74** when one and only one of the ports **77, 59a-c,** is open. If one of the ports **59a-c** is open, the liquid in the respective supply chamber **54a-c** is drawn through the respective supply channel. As long as the pressure is supplied for a sufficient duration, the liquid will be check valved at the respective outlet **70,** by the GCM. If instead it is one of the ports **77** that is opened, an air intake path is formed through the chip, including: the port; its via; a first bottom surface patterned channel from the port's via to a second via; the second via; a first top surface **(50a)** patterned path from the second via to chamber **71;** a second top surface path from the chamber **71** to a third via; the third via; and a second bottom surface patterned channel **78** from the third via to a meet **79** in the floor of hold **56.** The meet **79** is strategically located at an edge between the conic sloped peripheral part of the floor of the hold **56,** which both permits the channel **78** to withdraw substantially all liquid from the hold **56,** when used differently than as an air intake, and also enables bubble mixing, in that persistent suction (of a similar range of negative pressures used for valving) will lead to bubble entrainment into the liquid(s) introduced into the hold and these bubbles (especially when they burst) can mix a segregated liquid, as per Applicant's co-pending GB 2413861, the contents of which are incorporated herein by reference.

If successive delivery of fluids lead to an excessive volume (e.g. for bubble mixing) in the hold **56,** the first port **74** can be blocked, and one of ports **77** can be coupled to the vacuum supply, which will then draw volume (more than the threshold bolus size) from the hold **56** to a respective waste reservoir **71,** through channel **78,** but to avoid a requirement to withdraw all liquid, the vacuum supply will have to be reversible, such that it draws the liquid until after fall, and at some point thereafter, reverses the suction to apply a positive pressure, so as to shear the trickle. Thereafter, opening both ends to ambience will allow for the undelivered liquid to be subjected to bubble mixing in the hold **56.** While, the outlet shown at the junction of waste reservoir **71** and the second top surface path is shown with some kind of ridge, the ridge does not have limit edges (in that the internal angle α_{R} is reflex ~225°) and is not an embodiment of a GCM in accordance with the present invention, although it is fully expected to operate as a GCM, if sufficient volume is supplied. As a result only a large volume of liquid can be extracted from the hold (the reflex angle does not produce the pinching effect, and encourages spread of liquid some distance over three distinct sidewalls of the chamber **71,** while increasing surface adhesion of accreted liquid, to reduce fall (and regularity thereof) of accreted liquid until a larger volume is amassed. Still, as long as the liquid volume removed is in excess of a 100 µL, and the bolus formed of accreted liquid does not extend to a third sidewall of chamber **71,** or the floor, the valve can work as a gravitationally checked valve, albeit outside a scope of the present claims. In other embodiments a GCM is provided here for this fluid displacement. It is preferable that this valving can be stopped (with reversed pressure) to permit a desired residual volume of the liquid within hold **56** after some of the volume is removed, in accordance with some protocols. Once the bolus falls, and the desired volume is extracted, the suction applied at port **77** can be reversed, to return any liquid in the channel **78** to the hold **56,** leaving an airflow channel overtop the waste liquid in chamber **71** capable of performing another bubble mixing operation. Indeed the same channel via chamber **71** can be used as air intake for the next bubble mixing step.

FIGs. 3A-E depict perspective views of five variant relief structured substrates (covers removed) each providing a different GCM in accordance with the present invention. FIG. 3A is a transparent view with ghost lines showing parts that should otherwise be occluded by the substrate itself; and shows most of the substrate which, like FIGs. 1A,B is a single reaction chamber device. FIGs. 3B-E are zoomed-in frames showing analogs of: outlets **26/70a-c,** exit segments **25,** tops of vias **23,** ridges **32,** and floors **13** of holds **56/16,** and can be in any chip with suitable supply, and suction line not in view.

In FIG. 3A, a GCM **81a** is provided at the mouth of a hold **86a** in patterned substrate **80a,** which has a single top surface for meeting a cover. A ridge **82a** protrudes from a first sidewall **87a** of a hold **86a,** through which an outlet of the supply channel extends, as in previous embodiments, however, the ridge **82a** has compound side flanking faces, provided by the addition of a squat rectangular prism to a now familiar trapezoidal ridge. The addition of the prism effectively decreases the angle α_{R} from about 150°, to about 90°, improving the reliability of the limiting edges, and permitting less material to be used in defining the ridge **82a.** Similar advantages can be provided by replacing the planar flanking faces (and/or a front face **89a)** with concave curved faces.

An outlet of a supply channel opens at an angle to the front face **89a** that is centred on the front face **89a.** The supply channel, as in previous embodiments, is segmented. In this case, it has 4 segments: a short vertical bore from a supply chamber to a patterned bottom surface of the substrate **80a,** a generally J-shaped channel **84a** on the bottom surface, extending under the supply chamber from the short vertical bore to a via **85a;** the via **85a,** which has a top end **83a;** and a sloped channel segment **88a** extending from the via **85a,** where the via meets the top surface of the substrate **80a,** to the outlet, which is separated a distance d from the top surface. The separation d is preferably 10-60% greater than a separation between the limit edges and outlet. If d is greater than 2.6 mm, a bolus of aqueous liquid is unlikely to grow to reach the ceiling before fall, as there is nothing but the pinched accretion surface contacting the liquid, and the orientation is substantially vertical, a smaller volume is required before fall, in comparison with GCMs for which the bolus also extends across the ceiling. If d is about 3 mm a reasonable margin is provided for some applications.

FIG. 3B shows a GCM **81b** of a part of a patterned substrate **80b** with a fanned exit segment **84b** of a supply channel (mostly not in view) producing a flared outlet. As in previous embodiments, a ridge **82b** protrudes from a first sidewall **87b** (barely in view) of a hold **86b.** The part of the supply channel in view includes a top of a via **83b,** and the fanned exit segment **84b,** which extends from the via **83b** to the flared outlet, through front face **89b,** at a top meeting surface of substrate **80b** (as in all previous embodiments, except FIG. 3A). The exit segmen-t **84b** is defined by 5 planar surfaces of the substrate, that meet at rounded edges, and a sixth planar surface that is to be provided by a sealing cover (ceiling surface thereof). Two of the 5 planar surfaces are vertical surfaces, that flare outwardly from the via **83b** to the outlet at a constant angle. A central one of the planar surfaces **88b** is generally trapezoidal (ignoring the curvature that stems from the cylindrical shape of the via) and is sloped upwardly to decrease flare. Two angled planar surfaces between the 3 already described **(85b)** have shapes to smooth out the change in cross-sectional area of liquid flowing through the exit segment **84b.** As such, the cross-sectional area as a function of position varies from the circular cross-section of the via **83b,** to the 90° bend to a somewhat square profile to a rectangular profile of slightly higher surface area. The variation in nozzle design could affect splatter patterns and have a small-order effect on the bolus growth, but is not expected to otherwise change the general valving, as valving progresses with slow incremental growth of the bolus at the outlet.

An accretion surface and slide **89b** are provided on a front surface of the protruding ridge **82b.** Boluses of the liquid form on the accretion surface when supplied by the outlet **83b.** The outlet **83b** opens out of a downwardly sloping exit section **88b** fluidically connected to a top of a riser section **85b** of the supply channel **84b.** Boluses of the liquid are formed on the accretion surface and slide down a slide **89b** to a bottom of the receptacle **86b,** the slide **89b** comprising a beveled portion of the protrusion **82b** at the top of the protrusion **82b** adjacent the accretion surface and a vertical portion, the vertical portion being a front face of the protrusion below the beveled portion.

FIG. 3C, schematically illustrates part of a GCM **81c** on a substrate **80c** having a ridge **82c** protruding from at a first sidewall **87c** of a hold **86c.** A via **83c** of a supply channel and the exit segment **84c** thereof are in view. The nozzle shape of the exit segment **84c** is somewhat inverted with respect to that of FIG. 3B, in that the nozzle deepens vertically and contracts horizontally the closer one is to the outlet. To accomplish this, two sidewalls **85c** of the exit segment **84c** are pinched close at the outlet, and the bottom **88c** of the nozzle is ramped down-wardly to reduce the drop in cross-sectional area throughout the exit segment, as shown, but could be a horizontal plane if the nozzle is intended to increase a pressure at the outlet.

FIG. 3D schematically depicts, a GCM of a substrate with a ridge **82d** (labelled at its front face **89d)** protruding from at a first sidewall **87d** of a hold **86d.** An outlet of a supply channel (not shown, except a top end of via **83d,** and exit segment **84d)** feeds the hold **86d.** A slit **88d** in the front face **89d** extends from the outlet downwardly to just beyond the accretion surface, the slit having a depth that gradually diminishes at depth. The purpose of the slit is to centre the bolus as it grows. Otherwise, imperceptible surface defects, and vibrations have been found to permit a bolus to shift horizontally during growth. Such a shift, in the extreme can lead to the bolus hugging one delimiting ridge, and possibly even surrounding it. A slit in the centre (or equally a ridge, although this may be more difficult to fabricate) tends to avoid this phenomenon, at the expense of a tiny fraction of dead volume loss, and finer structure in the substrate patterning.

FIG. 3E schematically depicts a GCM variant of FIG. 3D, but with a wider, shallower exit segment **84e,** and a V-shaped slit **88e.** Like other embodiments, substrate **80e** shown (labelled at the top surface thereof for meeting a cover) has a hold **86e** with a sidewall **87e** through which a ridge **82e** extends (labelled on front face **89e** thereof). Both variants FIG. 3D,E show the squat rectangular prism extensions of the ridge shown in FIG. 3A. This embodiment is expected to be equally functional at FIG. 3D for centering bolus during growth.

While the foregoing depictions of the invention all have generally parallel limit edges, FIG. 3F schematically illustrates a GCM variant with a pair of edge limits that are non-parallel. In FIG. 3F, the ridge has a rectangular form for the slide **89f,** but above the slide, the ridge has a further protrusion consisting of a (negatively) canted accretion surface (through which exit segment **84f** extends), and two chamfers c. While shown with a relatively small chamfer, a deeper chamfer is preferred to ensure that the edge defined between the accretion provides a strong barrier to surface spreading.

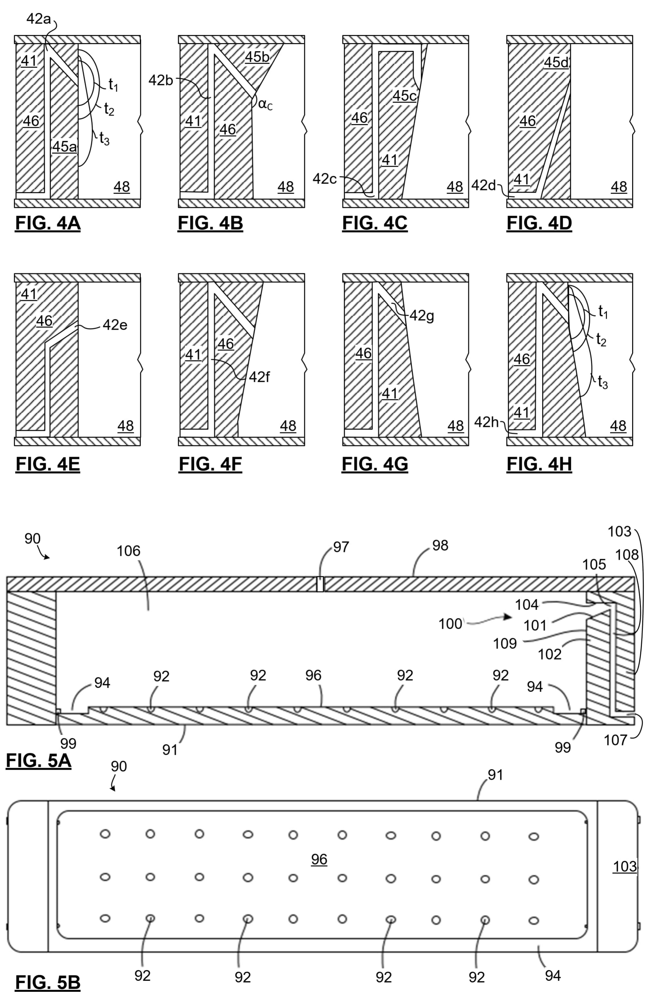

FIGs. 4A-H show cross-sectional side elevation views of variants of chips **40a-h** having top and bottom covers covering a relief patterned substrate **41.** Each defines a GCM that doesn't implicate a ceiling of the hold **48** (analog of **16,56,86a-e)** in operation, like FIG. 3A's GCM. The GCMs are provided by a variety of supply channels **42a-h** (analogs of **20,60a-c)** and profiles of front faces **44a-h** (analogs of **32a,89a-c)** of ridges **45a-h** (analogs of **17a,89a-c),** the cross-sectional images passing through respective first sidewalls **46** (analogs of **32,87a-e)** of respective holds **48.** A variety of supply channel forms and sidewall profiles is provided. As each feature of the supply channel and of the sidewall can generally be combined with other features of the GCM, combinations of these embodiments are within the present invention.

FIGs. 4A,B,G,H show segmented supply channels **42a,b,g,h** in chips **40a,b,g,h** respect-ively. The supply channels **42a,b,g,h** include a bottom channel segment that may meet the supply chamber, if the sidewall **46** separates the two (as in FIGs. 1B,3A, analogous to intake segment **22),** or the figure may only depict part of the respective supply channel. Whether partial or complete, the bottom channel segment meets a via (analogous via **23,85a)** that extends as a vertical through-bore in the substrate **41.** Near a top end of the via (analogous to **83a)** the via joins a sloped channel segment (analogous to **88a),** that extends from the top end of the via to an outlet to the hold **48.** The sloped channel segment makes an angle of 20°-60° with the via segment, as shown variously. While other angles are certainly possible, an angle greater than 60° tends to require an elongated sloped channel segment to maintain the desired separation (d) of the outlet from the cover, which is maintained in each variant. Extending the length of the sloped channel segment requires more chip material, and can complicate manufacture. Except for differences in diameters of the vias, FIG. 4A could be a cross-sectional image of FIG. 3A.

FIGs. 4B,F show one way to increase the angle between via and sloped channel segment without unduly shortening the d (separation from top shown in FIG. 3A): by angling the front face of the ridge by a cant angle, α_{C}. The angling can extend only to the outlet, as shown in FIG. 4B, or may extend nearly a whole depth of the sidewall, as shown in FIG. 4F (or indeed the whole depth as in FIG. 4C, or any intermediate location). Note that the angle supplementary to α_{C} is equivalent to an interior angle of the whole depth cant shown in FIG. 4C. The ridge may taper as a result of the cant, i.e. d_{P} may shrink to zero below the outlet, for an embodiment such as FIGs. 4C,F, but it is preferred that the bolus be marshalled by the edge limits beside, above and below the outlet if the outlet is below the top cover.

FIGs. 4C,D,E illustrate alternative supply channels. FIGs. 4D,E forego vias, in favour of a single sloped channel segment extending from the bottom channel segment, either straight, as shown in FIG. 4D, or with a single bend, as shown in FIG. 4E. FIG. 4C shows a canted front face of the ridge used to permit a vertical channel segment to end at the orifice, which are preferred in some forming routes.

While FIGs. 4B,C,F show a negative cant, the cant could alternatively be positive, as in FIGs. 4G,H. FIG. 4G is an even cant the whole depth of the sidewall **46,** and FIG. 4H, like FIG. 4B, has the cant extended only to the outlet. In FIG. 4H, the ridge projection d_{P} (as shown in FIG. 1C) at the opening, is preferably at least a diameter of the sloped channel segment.

FIGs. 4A,H schematically depict cross-sections of 3 boluses formed at 3 timepoints, to better illustrate the importance of maintaining a depth d to avoid contact with the ceiling provided by the top covers in the vicinity of the hold **48.** At a time t₁, the liquid **15** has formed a hemisphere with a radius matching the limiting edges of the ridge. The hemisphere might not be perfect, with a small perturbation due to gravity (FIG. 4A), or a bigger perturbation due to a bend of the front face (FIG. 4H). After t₁, the bolus grows increasingly less symmetrically, due to the pinched spread in the horizontal (in-plane and out-of-plane) directions until the weight overbears adhes-ion, and the bolus falls. The time point t₂ shows, the bolus having grown to greater extents upwards and downwards, and time point t₃ shows an instant in the tumble thereafter.

FIGs. 5A,B schematically depict a hold **106** with a floor **96** bearing an array of microfluidic liquid metering devices **92** in accordance with Applicant's co-pending US 63/619,256 entitled Technique for Small Volume Metering, the contents of which are incorporated herein by reference. Specifically a chip **90** is designed for tide-pool flooding and recess as disclosed therein, of the plurality of metering dimples **92** located as depressions in a raised slab section of the floor **96** of hold **106.** The metering is performed by valving liquid **15** into the hold **106,** until all dimples **92** are covered over (i.e., avoiding having to align boluses for delivery into each chamber) , and then extracting liquid from one or more ports **99.** It is preferable to have a single liquid front passing over the raised slab during the filling, to avoid entrapping air bubbles in the dimples **92.** The chip **90** comprises a patterned substrate **91** (cover removed in Fig. 4B) comprising an array of thirty dimples **92** (only 4 labelled) patterned into the slab, each dimple **92** having a same profile, depth and volumetric capacity defined by similar cupped surfaces. Nonetheless a different number of chambers, and chambers having different shapes, capacities or arrangements may be used to suit other protocols. To fill the metering dimples **92,** liquid is introduced into the hold **106** until the raised slab is overtopped with liquid thereby filling the dimples **92.** Excess liquid is then removed through waste liquid channels **99** via a common outer trough **94** around a perimeter of the slab. While the liquid could be introduced through a vent **97** in a cover **98** of the device **90,** the microfluidic check valve **100** is used instead, to regulate flow of liquid into the hold **106.**

The GCM **100** includes an accretion surface on a ridge surrounding an outlet defined between sloped, bottom **101** and flat top **104** surfaces defining an outlet (nozzle-shaped somewhat as shown in FIG. 3C) for a supply channel **108** (labelled at a via segment thereof). A ridge **102** protrudes from a first sidewall **103** of the chip, and an accretion surface surrounds the outlet on a front face of the ridge **102.** The GCM **100** receives the liquid from the outlet of the supply channel **108.** Negative pressure can be applied through the vent **97** to draw the liquid through the outlet on to the accretion surfaces where a bolus is formed, until it tumbles down front face **109** of the ridge **102.** The boluses slide down the face **109** into the trough **94** until enough liquid has been delivered to overtop the slab. In this manner, the GCM **100** can regulate a desired amount of liquid into the receptacle **106** without backwash into the supply channel **107.**

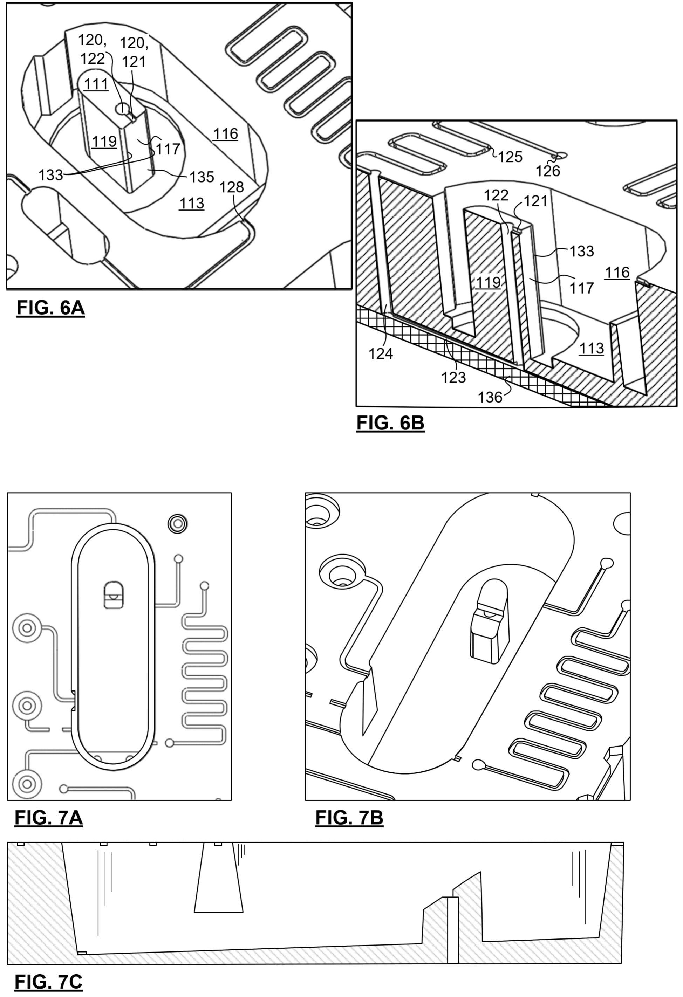

FIG. 6A,B schematically illustrate a substrate bearing a relief pattern defining (*inter alia*) a GCM having all of the regular features of a GCM, such as a supply channel **120** (analogous to **20** *et al.*), passing through a first sidewall **117** analogous to **17a** *et al.*, but that the sidewall **117** is an interior sidewall of the hold **116** (analogous to **16** *et al.*), specifically provided by a full-depth lozenge-shaped post **119.** The supply channel has the requisite 2 phase dimensions and hydraulic diameter, and hydrodynamic resistance for the GCM operation. An outlet **130** (analog-ous to outlet **26** *et al.*) is formed at the interface with the top cover (not in view) as in FIGs. 1. A height the outlet **130** is above a floor **113** of the hold **116** is also provided to permit the GCM. The accretion surface, and slide **135** are provided as undemarcated parts of the face of sidewall **117,** with limiting edges **133.** As the sidewall **117** is on a post **119,** the limiting edges **133** are not provided by a ridge protruding from the sidewall **117.** A suction line **128** is provided to couple the hold **116** with a pressure port of the chip (not in view) for drawing liquid through the supply channel **120.** The liquid will accrete around the outlet **130,** and form a bolus that grows and then falls under gravity. The limiting edges **133** constrains growth and encourages small droplet fall.

While only an exit segment **121** of the supply channel **120** is in view in FIG. 6A, cross-sectional perspective FIG. 6B shows the exit segment **121** (top-side defined), last throughbore via **122,** a straight segment **123** (bottom-side defined) to a second last throughbore via **124,** a serpentine segment **125** (top-side defined), and an opening to another throughbore via **126** which joins a feeding chamber at a floor thereof, with another bottom-side defined entry segment (not in view).

The post **119** has a top meeting surface **111** for meeting a cover (which is removed in all drawings to prevent occlusion of the system, but is present in use). The top meeting surface **111** may be of various shapes (rounded rectangular, but with a chiseled edge for the front face as shown), but is preferably flat, and has enough surface area, to seal off the exit segment **121.**

Floor **113** of the hold **117** is analogous to floor **17,** but that the floor **113** has a circular recess for limiting spread of a volume of liquid, the circular recess surrounding the post **119.**

FIG. 6B also shows a bottom cover **136,** the bottom surface of which providing a support surface for the chip in use. With the chip laid on a flat tabletop of regular orientation (normal facing vertically upwards) the GCM is positioned for operation.

FIGs. 7A-C are top plan, perspective, and cross-sectional elevation views of a final embodiment of the present invention. While the post **119,** of FIGs. 6 is shown as a full-depth structure, a GCM designed to avoid contact with the top surface can be provided with a sidewall on a lower depth structure. The embodiment of FIGs. 7 is on a same chip as that of FIG. 6. The GCM is provided with canted accretion surfaces, having an outlet that is vertically oriented, and is partially opened, and partially occluded by a cap of the post. While this opening is not ideal, as some amount of liquid will be held in a crotch of the opening, held by two mutually perpendicular surfaces (one vertical; one horizontal), the sloped accretion surfaces above and below this crotch are well circumscribed by limiting edges, as is a slide beneath the accretion surfaces, to reduce spread and force a fall. As will be evident to those skilled in the art, a stronger slope, and a smaller depth crotch are preferable for minimizing loss: there is no in-principal reason why the "top" surface of the post cannot be a single, highly canted surface, bearing the outlet, and sloped to face a slide. In this embodiment, the limit edges are provided by the sloped surface, and the slide is formally distinct.

### EXPERIMENTAL SECTION

The GCM has been verified and tested in a large number (dozens) of test chips and devices, and in some cases on a large number of instances. Specifically, chips have been developed for CRISPR genetic testing (more than a dozen designs and iterations), glucometer-based testing (more than a dozen designs and iterations), and finger-actuated testing (a handful of designs). Each design was submitted to a respective battery of tests. Test chips were produced for analysis of features of GCMs, including h, d_{HC}, α_{R}, and dₚ.

Advanced designs of all three applications were produced with 3D printing, and were composed of a biocompatible PMMA (safe for permanent skin contact). Advanced designs of the finger-actuated and gluocometer chips were also formed with injection molding, and were composed of Zeonor^{™} 1060R clear, or Makrolon^{™} 2458. FIGs. 1A, 1C, 2, 6 and 7 are all depictions of chips and parts thereof that were fabricated to prove the utility of the GCM.

Effective and reliable gravitationally-checked microvalving was repeatedly observed using these devices with a wide variety of aqueous samples, including: saliva (pooled); wash buffers, and reagents. While mechanisms of action of the GCMs varied quite significantly, the valving was successful for volumes in the 10-50 µL range. In some cases, smaller volumes of 6-10 µL range were valved successfully, but unless the liquid is well controlled, or the surfaces pre-wetted, the GCM is not repeatable for these volumes. The range of densities and viscosities of samples valved included: 70-80% ethanol wash buffer (balance water), and 50% VTM (balance water), and a dilution of PEG (about 28% of 25%w/w PEG35K, balance water). Specifically coloured water, PBS wash buffer, lysis buffer with 1-10.5% detergent, 0.05%-1% of Tween^{™} 20, or Triton-X100^{™}, resuspended lyophi-lized RT Lamp solution, and 2 µm - 20 nm magnetic bead dispersions have all been valved, and several chips have been produced in number and tested for reliability. In all cases low power (~15 mW) suction pumps were used to draw the liquid through the opening to form the bolus, which dropped, except for the finger-actuated device which was also tested using finger-pumped pressure (on a bladder) both negative and positive, for displacing the aqueous liquid. The only exception to utility found was if the viscosity of the liquid is too great for displacing the liquid at a reasonable rate. If the high ethanol content wash buffer is used, embodiments like FIGs. 5,6,7 may be preferred, or a trap is preferred in the vacuum supply line (such as 54d of FIGs. 2) is preferred for preventing the far wider crevice spread of the liquid, from blocking vacuum supply.

The novel features will become apparent to those of skill in the art upon examination of the description. It should be understood, however, that the scope of the claims should not be limited by the embodiments but should be given the broadest interpretation consistent with the wording of the claims and the specification as a whole.

## Claims

1. In a microfluidic device having a receptacle with a floor and at least one sidewall, a gravitationally checked microvalve (GCM), the GCM comprising:
a supply channel having a hydraulic diameter (d_{HC}) of 0.1-1 mm for non-capillary transport of an aqueous liquid, the supply channel comprising an outlet to the receptacle, at a first of the at least one sidewall; and
an enclosure upstream or downstream of the supply channel, adapted to enable a pressure difference on opposite sides of the enclosure to drive liquid through the supply channel to the outlet; and
an accretion surface at or proximate the outlet, adapted to guide growth and formation of a bolus of the liquid from the supply channel and limit horizontal spread of the liquid beyond the accretion surface, to draw a center of gravity of the bolus away from the first sidewall,
where a vertical separation between the outlet and the floor is at least 5.5 mm, when the device is in a use orientation, with a support surface of the device extending horizontally.

2. The GCM of claim 1, wherein the vertical separation is at least 6 mm, preferably 7-25 mm, more preferably 7.5-12 mm, yet more preferably 8-10 mm.

3. The GCM of claim 1 or 2, further comprising a slide oriented within 30° of vertical, the slide extending from the accretion surface towards the floor, wherein the accretion surface and slide are demarcated, or are undemarcated parts of the same surface of the ridge.

4. The GCM of claim 3, wherein the slide comprises one surface of a protruding ridge that projects horizontally towards an interior of the receptacle from the first sidewall, and runs vertically towards the floor, and: the outlet passes through the ridge along a top that meets a cover of the receptacle; or the outlet forms an orifice through the ridge.

5. The GCM of any one of claims 1 to 4, where the accretion surface is bounded by two limit edges, said limit edge having a minimum distance from the edge of the outlet of at least 0.01 mm and no more than 4.5 mm; where the two limit edges are parallel, or non-parallel and widen below the outlet to provide a trapezoidal or triangular accretion surface.

6. The GCM of claim 5 as dependent from claim 4, wherein the ridge has a projection depth from a sidewall base, and the limit edge is sharp, having a radius of 0.1-0.25 mm.

7. The GCM of claim 5 or 6, where the limit edge extends vertically to flank one side of the outlet, and principally limits horizontal spread across the first sidewall.

8. The GCM of claim 5, 6 or 7, where the accretion surface comprises exactly two limit edges, each: extending substantially vertically; and flanking a respective side of the outlet, whereby the limit edges constrain bolus growth by preventing surface spreading in two horizontal directions.

9. The GCM of any one of claims 1 to 8 where the accretion surface surrounds the outlet on at least 3 sides thereof, and has a mean orientation defined by a normal that is: horizontal; negatively inclined in that a normal ray from the accretion surface meets a horizontal plane of the floor; or is positively inclined with an angle of no more than 40°, more preferably 30°, above horizontal, to encourage bolus shedding.

10. The GCM of claim 4, or any one of claims 5 to 9 dependent from claim 4, wherein:
the ridge is shaped, at least in the vicinity of the accretion surface, as an acute trapezoid in horizontal cross-section, with its long base meeting the sidewall and short base, away from the outlet, providing the accretion surface, and two lateral sides, each lateral side having an internal angle with the short base of 90° to 145°;
the ridge further comprises a centralizing trench extending from the outlet toward the floor of the receptable; or
a width of the slide narrows or widens progressively as a function of distance from the outlet.

11. The GCM of any one of claims 1 to 10, wherein the supply channel:
comprises a multi-segment channel comprising at least one via segment that extends vertically a distance of at least 6 mm;
is coupled to a microfluidic blister pack or finger pump upstream of GCM, for manual delivery of aqueous liquid; or
comprises a nozzle at the outlet for changing a velocity profile of the liquid.

12. The GCM of any one of claims 1 to 11, wherein the receptacle:
further comprises one or more of the following: an extraction channel fluidically coupled to a port or chamber of the microfluidic device; at least one metering chamber, with an overflow channel; a gas supply line for injecting air into the receptacle to mix two or more liquids in the chamber; a plurality of GCMs for feeding a plurality of liquids into the receptacle via different paths;
provides the first sidewall as an interior sidewall;
includes an island structure providing the first sidewall as an exterior sidewall.

13. A microfluidic chip comprising the GCM of any one of claims 1 to 12, consisting of a relief patterned substrate and at least one cover cooperatively providing the enclosure, the enclosure including the receptacle and a pressure port in fluid communication with the receptacle, for coupling to a source of negative pressure, the enclosure sealed between the substrate and a cover, and the cover provides a ceiling of the receptacle, and the outlet is: sufficiently lower than the ceiling to ensure that the bolus does not contact the ceiling during bolus formation; or defined in part by the ceiling and an undemarcated portion of the ceiling is provided for bounding the bolus, where this: allows spreading of the bolus during accretion, increases surface adhesion of the bolus, but ultimately increases a distance of the centre of mass of the bolus from the first sidewall.

14. A microfluidic device comprising the microfluidic chip of claim 13, with a source of pressurized fluid coupled to the pressure port, the source adapted to apply the pressure difference, which is less than 15% of ambient pressure, and more preferably 0.65 to 3.5 kPa below ambient pressure.

15. A method for operating a gravitationally checked microvalve in a microfluidic device, the method comprising:
applying a pressure difference between first and second ends of an enclosed supply channel in the microfluidic device, to move a sample liquid towards the second end, which terminates at an outlet to a receptacle of the microfluidic device; and
providing at least one accretion surface proximate the outlet to limit contact surface area of the liquid from the outlet during formation of a bolus of the liquid, the at least one accretion surface drawing a center of mass of the bolus away from the outlet, until the bolus grows to a critical weight and volume that overbears adhesion to the accretion surface by limiting a horizontal spread of the bolus over a sidewall of the receptacle;
where: a vertical separation of a floor of the receptacle below the slide and the outlet is at least 5.5 mm; and
the receptacle accommodates the critical volume of the bolus so that the outlet is separated from a free surface of the receptacle by at least 2x a mean radius of the bolus of critical weight and volume, to prevent back flow from the receptacle through the supply channel.
